# EUROPEAN PATENT APPLICATION

(11) **EP 2 388 977 A1**
(43) Date of publication of application: **23.11.2011**
(21) Application number: 10290268.1
(22) Date of filing: 20.05.2010
(51) Int. Cl.: H04L 29/08, G06Q 10/00

(54) **Presence-aware reminder**

(71) Applicant: Alcatel Lucent, 75007 Paris (FR)
(72) Inventor: Castrec, Stéphane, 29228 Brest (FR); Elleouet, Jérôme, 29228 Brest (FR); Ocheret, Andrey, 193019 Saint-Petersbourg (RU)
(74) Representative: Demulsant, Xavier

(57) **Abstract**

A method for programming a task within a calendar client (2) comprising at least a presence-based rule to trigger the task reminder thereof.

## Description

### FIELD OF THE INVENTION

The present invention pertains to electronic reminders systems and methods.

### BACKGROUND OF THE INVENTION

Electronic reminders that trigger visual and/or audible content (reminder, to-do list, notification) based on time (i.e. date, hour, minute) and/or users' location have been common practice. Such systems are, mainly, based on time and/or location sensing to deliver certain information when a predefined time is reached and/or a predestined location is entered or left.

In fact, a reminder, provided with adequate sensors, continuously or regularly tracks time and/or users' location, so as to deliver thereto, on the right time and/or location, a notification associated to a pre-organized task. By a task, an appointment, a meeting, a deadline, a to-do list, or more generally an event, is meant.

A plurality of Personal Information Managers (PIM), such as Microsoft Outlook®, Microsoft Office Outlook Mobile®, Lotus Notes®, Novell GroupWise® or the likes, permits such tasks organization through a calendar reminder. A programmed task is, generally, defined by an object, a time and/or a location, and, possibly with additional options, such as priority level or periodicity.

Up-to-date calendar reminders suffer from a plurality of shortcomings, such as,
- problems with regards to dedicated hardware sensors to be embedded on users' terminal (for location tracking for example); and
- the lack of "degree-of-freedom" in tasks programming, as presently limited to temporal and spatial (location) notions.

One object of the present invention is to improve the usefulness of electronic reminders.

Another object of the present invention is to enhance calendar reminder capabilities for a more flexible tasks scheduling.

Another object of the present invention is to add another "degree-of-freedom" within tasks organization in a calendar reminder.

Another object of the present invention is to improve the efficiency of reminder notification delivery.

Another object of the present invention is to provide a method for a task programming within a calendar reminder.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawings in which:
- figure 1 is a schematic diagram illustrating task creation within a calendar client according to one embodiment;
- figure 2 is a illustrative diagram of a graphical user interface supported by a calendar client according to one embodiment;
- figure 3 is a schematic diagram illustrating a task reminder delivery according to one embodiment.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

Presence/Availability Management (PAM) systems are known in the art. They are, mainly, in charge of providing real-time presence information about users connected, via user terminals, to a certain communications platform. Presence information is intended, here, to mean the presence, availability and willingness, of a user connected to the communications platform, to interact/communicate.

Presence information contributes towards real-time communications means evolving as it make more intelligent decision about users interactions by reducing information latency and improving time and resources management. Accordingly, it is quickly becoming the "must-have" technology for real time communications means.

In particular, presence information is among main characteristic features of Instant Messaging Systems, or more generally, Unified Communications Systems. In such systems, presence information refers to a status indicator ("online", "away", "busy", "be right back", "on the phone", "out to lunch" for example) that conveys the availability and/or the willingness of a user to communicate. Thus, presence information comprises information about a user's current online status in a unified communications system.

The present invention uses presence information as a criterion for a task programming within a calendar reminder, coupling, by the way, unified communications systems advantages to electronic reminders ones.

The use of presence information represents a "degree-of-freedom" in tasks programming, in addition to conventional ones, namely "location" and/or "time".

In fact, the present invention relates to a method for programming a task within a calendar client comprising at least a presence-based rule to trigger the task reminder thereof.

The present invention further relates to a presence-aware reminder system comprising a calendar client including a graphical user interface permitting to establish at least a presence-based rule to trigger a task reminder.

The present invention further relates to a computer program product adapted to perform the method cited above.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DETAILED DESCRIPTION OF ILLUSTRATIVE EMBODIMENTS

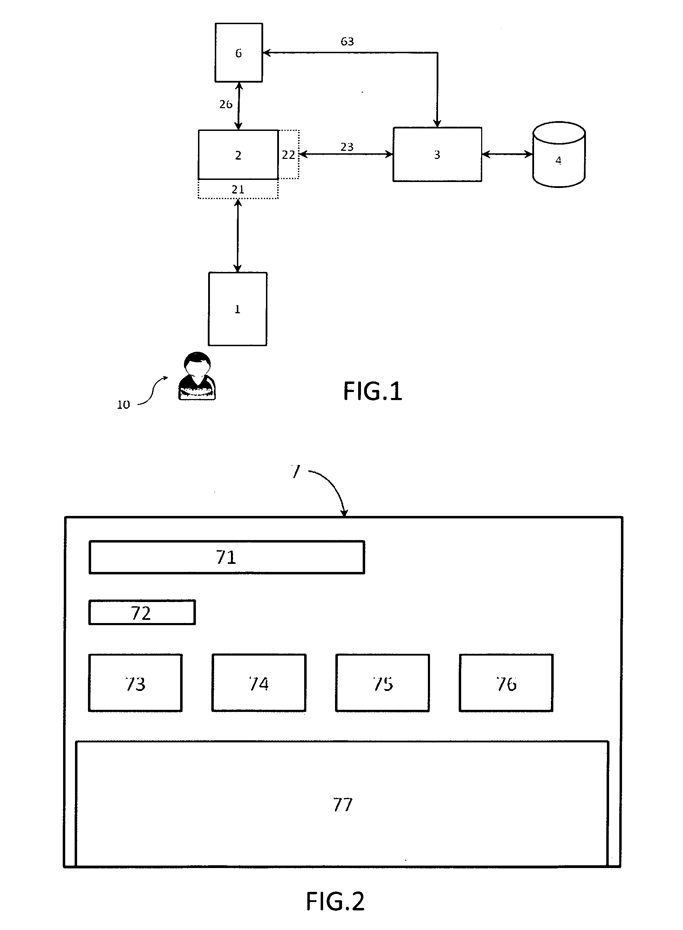

With reference to figure 1, there is shown an illustrative architecture of a presence-aware reminder system, including
- a calendar client 2, generally associated to a Personal Information Manager (PIM) such as Microsoft Outlook®, Microsoft Office Outlook Mobile®, Lotus Notes®, Novell GroupWise®, or a web-based platform (Google® Calendar, Yahoo® Calendar for example); and
- a presence server 3, gathering users presence information.

The calendar client 2 may be locally installed on the user terminal 1 or be accessed via a network connection (Internet, Intranet, or Extranet for example). Moreover, the calendar client 2 may be compatible with a wide range of user terminals 1, including small hand help devices such as Personal Digital Assistant (PDA), web enabled cell phones (or Smartphone), personal computers (PC), and ebook readers (iPad® for example).

In one embodiment, the calendar client 2 is linked to a calendar server 6. Microsoft Exchange Server, IBM Domino Server, Zimbra (Linux), and OBM (Linux) are examples of such calendar server 6.

The presence server 3 is configured to be informed (in a push system or a pull system way) in real-time about the presence information of user 10. To that end, the presence server 3 may be
- itself, a presence server of an unified communications platform, such as those of My Teamwork™ (produced by Alcatel-Lucent), My Instant Communicator™ (produced by Alcatel-Lucent), Skype™ Windows Live Messenger™, Microsoft Office Communicator™, Yahoo! Messenger™, IBM Lotus Sametime®, ICQ™, Google Talk™, MSN™ Web messenger ; and/or
- connected to a plurality of presence agents from which at least an information about the presence and/or the availability of user 10 may be retrieved. For this, the presence server 3 may comprise a multi-protocol/multi-interface support allowing for aggregation across a broad array of presence information sources enabling a more comprehensive view of the user 10 presence. In particular, the presence server 3 may be provided with dedicated protocols for such data retrieving (SIP- Session Initiation Protocol, APEX-Application Exchange, Prim-Presence and Instant Messaging Protocol, XML-based XMPP-Extensible Messaging and Presence Protocol, IMPS - Instant Messaging and Presence Service for example).

Accordingly, the presence server 3, in permanent connection to at least one presence-aware application to which the user 10 is currently connected, keeps an updated view on user 10 presence information. Such presence-aware applications may be installed on the user terminal 1 or the likes (Smartphone, personal computer, PDA for example) associated to the user 10.

For illustration purposes, the presence server 3 is supposed to be, in the following, a presence server of a unified communications platform. Persons skilled in the art will readily appreciate how the teachings of this disclosure may be applied to other presence-aware applications (gaming applications, IP phones for examples), other than unified communications ones, able to feed the presence server 3 with presence information.

Generally, the user 10 provides, through a unified communications client application (My Teamwork™, Microsoft Office Communicator™, IBM Lotus Sametime® for example) his presence information. Different forms of presence availability or presence status are known in the art, such as "online", "busy", "on the phone", "away from my desk", "away from home", "busy", "out to lunch", "be right back", " do not disturb", "invisible", "in meeting", "on vacation". This presence information may be
- manually selected, by the user 10, from a set of customizable status;
- automatically, modified according to predefined rules (select "away from my desk" if I don't touch the keyboard for more than 10 minutes, select "connected from home" if may IP address is 192.168.10.12, or select "on the phone" if my phone line is busy for example);
- enriched by supplementary data such as preferred medium for contact, current geographical location (deduced, for examples, from IP addresses or from associated sensors such as RFID tags), current activity, current mood, or any other comment the user 10 may add.

With reference now to figure 2, the calendar client 2 is configured to furnish a graphical user interface 7 through which a user 10 can organize a task, such as the one of Microsoft Office Outlook® which may be obtained by clicking on "Task", then "File", then "New", then "Task". This graphical user interface 7 comprises
- a plurality of widgets 71 intended for tasks management (save, delete, modify, close, sort for example);
- a task object 72;
- at least one presence-based rule 73; and preferably
- time-based rules 74 (date, start-time, end-time, periodicity for example), location-based rules 75 (location name, location address, proximity threshold for example) and others parameters 27 (importance, repetition, notification sound); and
- a task description 77.

Thus, the presence information of user 10 is taken into account while the organization of a task in the calendar client 2.

As illustrative examples of presence-based rules 73 which may be established, one can mention: trigger the task reminder,
- when the status of user 10 goes to "out of enterprise" ;
- when the status of user 10 is modified from "online" to "go to lunch";
- when the status of user 10 remains two hours in "in meeting";
- thirty minutes after than the status of user 10 is modified from "on line" to "offline".

Notably, the user 10 is invited, in a configuration step, to specify, to the calendar client 2, at least a user profile (including for example an email, a nickname, a phone number, and/or a name) known by the unified communications platform that is connected to the presence server 3.

When a task, created by the user 10, comprises presence-based rules 73, the calendar client 2 tries to keep an updated view of user 10 presence information which is available on presence server 3.

In one embodiment, the calendar client 2
- transmits (link 23 in figure 1) the presence-based rules 73, in association with the user profile of user 10, to the presence server 3 to be maintained in database 4; and
- asks for notification to the presence server 3 with respect to the specified presence-based rules 73 (for example, the current presence information, or the evolution/variation of the presence information of user 10).

When a task is created, the calendar client 2 communicates the presence-based rules 73 to the presence server 3, to be stored in the database 4. As soon as these presence-based rules are detected on presence information of user 10, the calendar client 2 is immediately informed. A notification is transmitted by the presence server 3 to the calendar client 2, as soon as these presence-based rules 73 are met. Therefore, the calendar client 2 is able to trigger the task reminder according to predefined rules.

In alternative embodiment, a copy of the created task is communicated (link 26 in figure 1) to the calendar server 6. Then, instead of the calendar client 2, it is the calendar server 6 which is charge of the supervision (link 63 in figure 1) of user 10 presence information with regards to presence-based rules 73. In other words, the calendar server 6
- transmits (link 63 in figure 1) the presence-based rules 73, in association with the user profile of user 10, to the presence server 3 to be maintained in database 4; and
- asks for notification to the presence server 3 with respect to the specified presence-based rules 73 (for example, the current presence information, or the evolution/variation of the presence information of user 10).

As soon as these presence-based rules are detected on presence information of user 10, the calendar server 6 is immediately informed. A notification is transmitted by the presence server 3 to the calendar server 2, as soon as these presence-based rules 73 are met. Therefore, the calendar server 6 is able to trigger the task reminder according to predefined rules. Advantageously, this embodiment
- avoids introducing modifications in the calendar server 6; and
- permits to deliver task reminders when the calendar client 2 is closed or not connected to the presence server 3, for whatever raison(s).

In order to avoid redundancy in the content of database 4, exchanged data between the calendar client 2 and the presence server 3 or between the calendar server 6 and the presence server 3 may comprise a task identifier, a user 10 identifier and at least a presence-based rule 73.

It is to be noted that appropriate plug-in (also called Add-in) 22 and API 21 (Application Programming Interfaces or Notes with IBM products) may be utilized with current calendar clients 2 (such as the calendar reminder of Microsoft Outlook®, Microsoft Office Outlook Mobile®, Lotus Notes®, Novell GroupWise®, Google® Calendar, or Yahoo® Calendar for example), respectively, for presence information retrieving and presence-based rules programming.

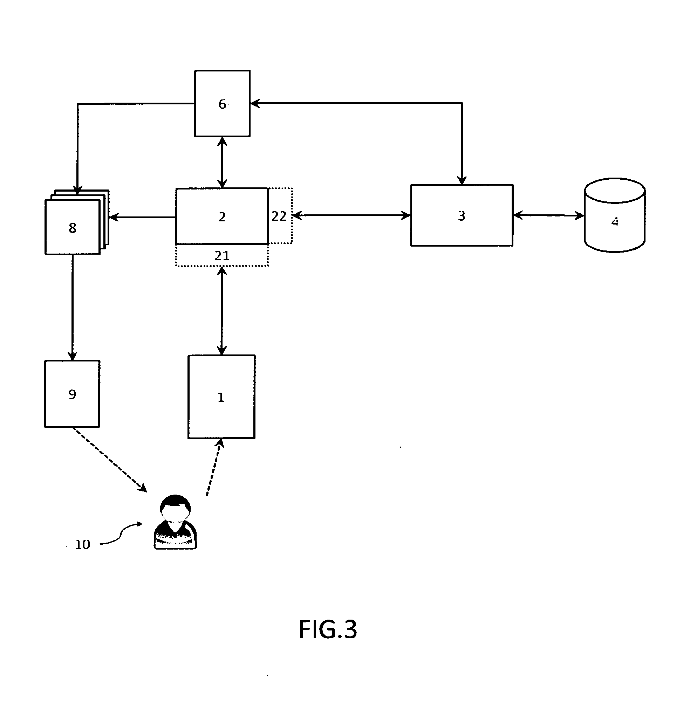

Figure 3 shows illustrative architecture permitting presence information monitoring and task reminder triggering.

Let us suppose, here, that the user 10 goes to lunch. Then,
- he may manually changes, in his unified communications application client, his status to "out to lunch"; or
- his presence information may be automatically changed: in a programmed way (everyday, select "out to lunch" between 12h and 14h for example), or in function of contextual information (the IP address, the network identifier, the user location retrieved from dedicated location means: GPS, a RFID tag network for example).

Subsequently, his presence information, in the presence server 3, is automatically or manually updated to an "out to lunch". Then, knowing the current presence information of user 10, the presence server 3 can survey the occurring of the presence-based rules 73 stored in database 4 and previously established by the user 10 with regards to a certain task.

As soon as a presence-based rule 73 is satisfied, the presence server 3 notifies the calendar client 2 thereof. Then, according to predefined user 10 preferences and rules, the calendar client 2 delivers the task reminder to the user 10.

In one embodiment, the calendar server 6 routes the task reminder to a gateway 8 compatible with the user terminal 9. As non-limitative examples, the gateway 8 may be a SMS (Short Message Service) or a MMS (Multimedia Message Service) gateway, a plug-in allowing sending SMS from a Personal Information Manger or the likes.

Alternatively, if the presence server 3 notifies the calendar server 6 instead of the calendar client 2, then, in a similar way, the calendar server 6 delivers, according to predefined preferences and rules, the task reminder to the user 10 via the calendar client 2 or gateway 8.

A triggered task reminder is then disarmed and/or reset within the calendar client 2 or the calendar server 6.

User 10 preferences may comprise, for examples, the terminal 1, 9 (PDA, Smartphone, personal computer, ebook reader for example) on which he prefers to receive the task reminder, or the message form (test or multimedia message form).

When the presence server 3 informs the calendar server 6 about the occurrence of presence-based rules 73, the latter 2 triggers the task reminder if all the rules thereof are met. If it is the case, the task reminder will be
- transmitted to the calendar client 2, then displayed, for the user 10, on the user terminal 1; or
- transmitted to the gateway 8 (one or a plurality of plug-in(s) that can send a notification (in text or multimedia message form) in function of the user terminal 9).

Advantageously, such embodiment permits to alert the user 10 when he his away from his user terminal 1, or the latter is switched off.

Advantageously, the task reminder may be sent over various user terminals 1, 9 used by the user 10 for receiving the notification, in function of user 10 preferences and/or the user terminals 1, 9 availability and state (switched on/off, reachable/unreachable, able or not to display a multimedia message for example).

In an embodiment, the user's presence information are utilized to indicate the most appropriate user terminal 1, 9 through which the task reminder will be delivered. As an illustrative example, if the presence information of user 10 is "online" in a presence-aware mobile application (installed on the mobile phone 1 for example) and "offline" in another presence-aware application installed on the personal computer 9 of user 10, then, in this case, it is more pertinent to deliver the task reminder through the user terminal 1.

In an embodiment, presence-based rules of a task may pertain to a plurality of user accounts in one or more unified communications application client(s). As illustrative examples,
- a user may organizes a task so as to be notified if his presence information is "away" in a first instant messaging application (for example Microsoft Office Communicator™ - installed on his personal computer), and "online" in a second instant messaging application (MSN™ mobile - installed on his mobile phone);
- a user may simultaneously notify a group of users, each one using at least a presence-aware application.

It is noteworthy to mention that the user 10 may combine presence-based, time-based and/or location-based rules, such as: trigger the task reminder when the status changes to "out to lunch", my location is "in the vicinity of the restaurant A", the start time is 04/5/2012 at "13h" and the end time is 04/5/2012 at "14h".

It is to be noted that presence servers and/or presence-based applications functioning are not part of the present invention, so that any desirable method may be implemented without getting out of the scope of the invention.

Reference throughout the specification to "one embodiment" or "an embodiment" means that a particular feature, structure or characteristic described in connection with the embodiment is included in at least one embodiment of the present invention. Thus, the appearance of the phrases "in one embodiment" or "in an embodiment" in various places throughout the specification are not necessarily all referring to the same embodiment. Furthermore, the particular features, structures, or characteristics may be combined in any suitable manner in one or more embodiments.

## Claims

1. A method for programming a task within a calendar client (2) comprising at least a presence-based rule (73) to trigger the task reminder thereof.

2. The method of claim 1, comprising a transmission step of the presence-based rule (73) to a presence server (3).

3. The method of any of claims 1 to 2, wherein the presence-server (3) informs the calendar client (2) when the presence-based rule is met.

4. The method of any of claim 1 to 3, further comprising a delivery step of the task reminder according to predefined preferences and rules.

5. The method of claim 4, wherein predefined references comprises the user terminal (1, 9) on which the task reminder will be delivered.

6. The method of claim 5, wherein the user terminal (1, 9) on which the task reminder will be delivered is deduced from the presence information available on the presence server (3).

7. The method of any of claim 1 to 6, wherein the calendar client (2) routes the task reminder to a gateway (8) compatible with the user terminal (1,9).

8. The method of any of claims 1 to 7, further comprising time-based rules or location-based rules (74).

9. The method of any of claims 1 to 8, wherein the calendar client (2) is a calendar server (6).

10. A presence-aware reminder system comprising a calendar client (2) including a graphical user interface (7) permitting to establish at least a presence-based rule (73) to trigger a task reminder.

11. The system of claim 10, further comprising a presence server (3).

12. The system of claim 11, wherein the presence server (3) is the presence server of an unified communications platform.

13. The system of claim 11, wherein the presence server (3) is connected to a plurality of presence agents from which at least an information about the presence or the availability of a user (10) may be retrieved.

14. The system of any of claims 10 to 13, further comprising a gateway (8) via which the task reminder is delivered to a user terminal (9).

15. A computer program including instructions stored on a memory of a computer and/or a dedicated system, wherein said computer program is adapted to perform the method as claimed in preceding claims 1 to 9.
